# EUROPÄISCHE PATENTSCHRIFT

(11) **EP 1 537 501 B1**
(45) Veröffentlichungstag und Bekanntmachung des Hinweises auf die Patenterteilung: **11.03.2015**
(21) Anmeldenummer: 03776856.1
(22) Anmeldetag: 23.07.2003
(51) Int. Cl.: G06F 17/50

(54) **VERFAHREN UND VORRICHTUNG ZUR DATENVERARBEITUNG**
METHOD AND DEVICE FOR PROCESSING DATA
PROCEDE ET DISPOSITIF DE TRAITEMENT DE DONNEES

(30) Priorität: 07.08.2002 DE 10236271; 07.08.2002 DE 10236272; 07.08.2002 DE 10236269; 16.08.2002 WO PCT/EP02/10065; 21.08.2002 DE 10238174; 21.08.2002 DE 10238173; 21.08.2002 DE 10238172; 27.08.2002 DE 10240022; 27.08.2002 DE 10240000; 03.09.2002 WO PCT/DE02/03278; 06.09.2002 DE 10241812; 09.09.2002 WO PCT/EP02/10084; 18.09.2002 DE 10243322; 18.09.2002 WO PCT/EP02/10464; 18.09.2002 WO PCT/EP02/10479; 19.09.2002 WO PCT/EP02/10536; 19.09.2002 WO PCT/EP02/10572; 10.10.2002 EP 02022692; 06.12.2002 EP 02027277; 07.01.2003 DE 10300380; 20.01.2003 DE 300152 q; 20.01.2003 WO PCT/EP03/00624; 18.02.2003 DE 300489 q; 06.03.2003 DE 10310195; 21.03.2003 DE 300942 q; 04.04.2003 DE 10361529; 30.04.2003 EP 02022692; 15.05.2003 DE 10321834; 17.06.2003 EP 03013694; 02.07.2003 EP 03015015
(43) Veröffentlichungstag der Anmeldung: 08.06.2005
(73) Patentinhaber: PACT XPP Technologies AG, 80807 Munich (DE)
(72) Erfinder: VORBACH, Martin, 67360 Lingenfeld (DE); MAY, Frank, 81927 München (DE); NÜCKEL, Armin, 76777 Neupotz (DE)
(74) Vertreter: Vossius & Partner
(86) Internationale Anmeldenummer: PCT/EP2003/008081
(87) Internationale Veröffentlichungsnummer: WO 2004/021176

(56) Entgegenhaltungen:
- WO-A-00/38087
- US-A- 6 086 628
- SCHMIT H ET AL: "Hidden Markov modeling and fuzzy controllers in FPGAs" FPGAS FOR CUSTOM COMPUTING MACHINES, 1995. PROCEEDINGS. IEEE SYMPOSIUM ON NAPA VALLEY, CA, USA 19-21 APRIL 1995, LOS ALAMITOS, CA, USA,IEEE COMPUT. SOC, US, 19. April 1995 (1995-04-19), Seiten 214-221, XP010151173 ISBN: 0-8186-7086-X
- SIMUNIC T ET AL: "Source code optimization and profiling of energy consumption in embedded systems" PROCEEDINGS OF THE 13TH INTERNATIONAL SYMPOSIUM ON SYSTEM SYNTHESIS, 20. September 2000 (2000-09-20), Seiten 193-198, XP010514346
- NING ZHANG ET AL: "Architectural evaluation of flexible digital signal processing for wireless receivers" SIGNALS, SYSTEMS AND COMPUTERS, 2000. CONFERENCE RECORD OF THE THIRTY-FOURTH ASILOMAR CONFERENCE ON, Bd. 1, 29. Oktober 2000 (2000-10-29), Seiten 78-83, XP010535338
- FORNACIARI W ET AL: "System-level power evaluation metrics" 1997 PROCEEDINGS OF THE 2ND ANNUAL IEEE INTERNATIONAL CONFERENCE ON INNOVATIVE SYSTEMS IN SILICON. ISIS '97. AUSTIN, TX, PROCEEDINGS OF THE ANNUAL IEEE INTERNATIONAL CONFERENCE ON INNOVATIVE SYSTEMS IN SILICON, NEW YORK, NY : IEEE, US, 8. Oktober 1997 (1997-10-08), Seiten 323-330, XP010252327 ISBN: 0-7803-4276-3
- BAUMGARTE V ET AL: "PACT XPP - A Self-Reconfigurable Data Processing Architecture" PROCEEDINGS OF THE INTERNATIONAL CONFERENCE ON ENGINEERING OF RECONFIGURABLE SYSTEMS AND ALGORITHMS ERSA 2001, 25. Juni 2001 (2001-06-25), XP002256066
- SNIDER G ED - ASSOCIATION FOR COMPUTING MACHINERY: "PERFORMANCE-CONSTRAINED PIPELINING OF SOFTWARE LOOPS ONTO RECONFIGURABLE HARDWARE", FPGA 2002.10TH.ACM INTERNATIONAL SYMPOSIUM ON FIELD - PROGRAMMABLE GATE ARRAYS. MONTEREY, CA, FEB. 24 - 26, 2002; [ACM/SIGDA INTERNATIONAL SYMPOSIUM ON FIELD PROGRAMMABLE GATE ARRAYS], NEW YORK, NY : ACM, US, 24 February 2002 (2002-02-24), pages 177-186, XP001504599, DOI: 10.1145/503048.503075 ISBN: 978-1-58113-452-0

## Beschreibung

Die Erfindung betrifft das oberbegrifflich Beanspruchte und befaßt sich somit mit Verbesserungen bei multidimensionalen Feldern aus datenverarbeitenden Zellen zur Datenverarbeitung.

Es sind bereits multidimensionale Felder aus datenverarbeitenden Zellen bekannt. Zur Gattung dieser Bausteine zählen insbesondere systolische Arrays, neuronale Netze, Mehrprozessor Systeme, Prozessoren mit mehreren Rechenwerken und/oder logischen Zellen und/oder kommunikati-ven/peripheren Zellen (IO), Vernetzungs- und Netzwerkbausteine wie z.3. Crossbar-Schalter, ebenso wie bekannte Bausteine der Gattung FPGA, DPGA, Chameleon, XPUTER, etc.. Es sind insbesondere Bausteine bekannt, bei denen erste Zellen während der Laufzeit ohne Störung des Betriebes weiterer Zellen umkonfigurierbar sind, vgl. etwa die folgenden Schutzrechte und Anmeldungen desselben Anmelders: P 44 16 881.0-53, DE 197 81 412.3, DE 197 81 483.2, DE 196 54 846.2-53, DE 196 54 593.5-53, DE 197 04 044.6-53, DE 198 80 129.7, DE 198 61 088.2-53, DE 199 80 312.9, PCT/DE 00/01869, DE 100 36 627.9-33, DE 100 28 397.7, DE 101 10 530.4, DE 101 11 014.6, PCT/EP 00/10516, EP 01 102 674.7.

Die vorliegende Erfindung befasst sich aber nicht nur mit dem vorteilhaften Aufbau eines multidimensionalen Feldes rekonfigurierbarer Elemente wie bei rekonfigurierbaren Prozessoren, sondern auch mit Verfahren zu deren Betrieb, etwa derart, daß eine Übersetzung einer klassischen Hochsprache (PROGRAMM) wie Pascal, C, C++, Java etc. auf eine rekonfigurierbare Architektur ermöglicht wird.

Oftmals wird hier nicht das gesamte multidimensionale Feld rekonfigurierbarer Elemente samt aller zwischen den Daten handhabenden Elementen vorgesehenen Bussystemen, Verbindungsleitungen usw. zur Umkonfiguration freigegeben, sondern es besteht vielmehr das Erfordernis, eine neue Aufgabe einem kleinen Teilbereich des multidimensionalen Feldes zuzuordnen. Es ist überdies häufig nicht vorhersagbar, wie dieser Teilbereich beschaffen sein wird. Dies gilt insbesondere dann, wenn auf dem multidimensionalen Feld rekonfigurierbarer Elemente mehrere Aufgaben parallel abgearbeitet werden müssen, etwa im Wege des Multitasking, und/oder nicht vorhergesagt werden kann, wann dort, etwa bei Echtzeitanwendungen, welche Ressourcen zwecks Umkonfiguration freigegeben werden.

Prinzipiell besteht die Möglichkeit, einen Code, der auf dem multidimensionalen Feld rekonfigurierbarer Elemente abgearbeitet werden soll, zur Laufzeit zu übersetzen, also erst dann, wenn die Abarbeitung anderer Aufgaben schon begonnen hat, festzulegen, wie der als nächstes auszuführende Code bestimmten rekonfigurierbaren Elementen zuzuordnen ist, wie die Verbindung zwischen diesen laufen soll, welche Zwischenspeicherungen erforderlich sind usw. Es ist einsichtig, dass eine solche Vorgehensweise zur Übersetzung einen vergleichsweise hohen momentanen Datenverarbeitungsaufwand erfordert. Gerade in kritischen Rechnerapplikationen, die ein Höchstmaß an Rechenleistung erfordern, ist es gewünscht, für eine solche Übersetzung während der Laufzeit keine zusätzliche Rechenleistung zu verbrauchen. Es ist daher auch schon üblich, Programmcode vor Beginn des Programmes zu kompilieren und dann Teilkonfigurationen zu bestimmen, die jeweils in das Feld hinein konfiguriert werden, sobald dort entsprechende Ressourcen frei sind.

Ein Problem besteht allerdings darin, dass, gerade bei Echtzeitanwendungen, im Vorfeld nicht feststeht, wie die jeweils verfügbaren Ressourcen angeordnet sind. Dies betrifft einerseits die Funktionalität der zur Datenhandhabung verfügbaren Elemente, in die hinein konfiguriert werden könnte, sofern nicht alle Daten handhabenden Elemente dieselbe Funktion besitzen. So wäre denkbar, in einem multidimensionalen Feld rekonfigurierbarer Elemente verschiedene Zellen mit Rechenwerken auszustatten, die für Fließkomma-Berechnungen ausgelegt sind, Elemente vorzusehen, die lediglich Bool'sche Daten handhaben, Elemente, die über zugeordnete Speicher verfügen, Elemente, mit oder in denen Sequenzer vorgesehen werden können usw. Hier ist eine Ausführung mit Vorkompilierung darauf angewiesen, entweder mit der Umkonfiguration zu warten, bis genau jene Zellen zur Verfügung stehen, die die in der Vorkompilierung festgelegten Funktionen und Anordnungen besitzen. Auch muß bei der Vorkompilierung zudem der kleinste, allen Zellen gemeinsame Funktionsumfang verwendet werden. Beides verschwendet Ressourcen. Zudem ist meist nicht klar, wie die für die Umkonfiguration freigegebenen Elemente angeordnet sind und welche Verbindungen verfügbar sind; auch dadurch wird gegebenenfalls die Hineinkonfiguration einer neuen Aufgabe (Task) massiv erschwert.

Das Problem wird noch gravierender, wenn große Bereiche des multidimensionalen Feldes freigegeben werden und prinzipiell die Möglichkeit und/oder der Zwang besteht, mehrere Konfigurationen für unterschiedliche Aufgaben gleichzeitig in das Feld hinein zu konfigurieren.

Es wird somit gemäß einem ersten wesentlichen Aspekt der Erfindung ein Verfahren zum Betrieb eines multidimensionalen Feldes rekonfigurierbarer Elemente vorgeschlagen, worin Gruppen zusammen datenhandhabender Elemente in vorbestimmter Weise während der Laufzeit zur Abarbeitung vorgegebener Aufgaben im Feld konfiguriert werden und wobei vorgesehen ist, dass für zumindest eine abzuarbeitende Aufgabe eine Mehrzahl von solchen Elementgruppenanordnungen im multidimensionalen Feld bestimmt wird, die zur Abarbeitung der vorgegebenen Aufgabe geeignet sind, für die Abarbeitung der vorgegebenen Aufgabe eine dann besonders geeignete Elementgruppenanordnung aus der Mehrzahl ausgewählt wird und die ausgewählte Anordnung in das Feld hinein konfiguriert wird.

Die Erfindung schlägt somit vor, bei der Vorbereitung der eigentlichen Datenverarbeitung eine Vielzahl von Anordnungen bzw. Konfigurationen vorherzubestimmen und dann aus den vorbestimmten Elementgruppenanordnungen eine solche auszuwählen, die für die Abarbeitung der vorgegebenen Aufgabe bei den dann gegebenen Feldressourcen besonders gut geeignet ist. Damit ist eine wesentliche Verbesserung im Betrieb eines multidimensionalen Feldes rekonfigurierbarer Elemente im Wesentlichen durch eine einfache Erweiterung des Compilers gegeben, mit dem die zuvor programmierten Codes übersetzt werden, und zwar dadurch, dass dieser nicht nur eine einzige Konfiguration für eine gegebene Aufgabe bestimmt, sondern mehrere solcher Konfigurationen und somit ausnützt, dass keine eindeutige Lösung für das Problem besteht, ein Stück gegebenen Hochsprachecode auf ein multidimensionales Feld rekonfigurierbarer Elemente zu übersetzen. Es sei erwähnt, daß hier der Begriff "Compiler" verwendet wird für ein Mittel, das Konfigurationen bestimmt, unabhängig davon, ob es sich um einen Routerteil, einen Übersetzerteil oder einen anderen Teil eines Mittels zur Konfigurationsbestimmung anhand von Programmcodes handelt. Dieses Mittel kann mittels Festverdrahtung, d. h. als Hardware oder als Softwareprogramm realisiert sein.

Es ist möglich, aus dieser Vielzahl von potentiell möglichen Konfigurationen, die zur Abarbeitung eines gegebenen Stück-Codes möglich sind, eine Auswahl anhand der Geometrie zu treffen, die diese Elementgruppenanordnung im Vergleich zu jener besitzt, die die im multidimensionalen Feld für die Umkonfiguration verfügbaren bzw. vermutlich bald verfügbar werdenden Elemente besitzen. So kann durch einen einfachen Mustervergleich versucht werden, eine Konfiguration, d. h. Elementgruppenanordnung, auszuwählen, die möglichst alle der frei gewordenen oder frei werdenden Elemente abdeckt bzw. möglichst wenig Elemente des multidimensionalen Feldes ungenutzt lässt. Wenn lediglich auf die Geometrie Rücksicht genommen wird, etwa weil alle Daten handhabenden Elemente des multidimensionalen Feldes den für die Hineinkonfiguration erforderlichen Funktionsumfang besitzen, so kann die Auswahl mit per se bekannten Algorithmen wie bei der Schnittmusteroptimierung erfolgen. Es kann dabei entweder auf die bereits verfügbaren Elemente Bezug genommen werden oder es kann, insbesondere im Hinblick darauf, dass die Umkonfiguration oftmals die Übertragung von Konfigurationsdaten zu den Elementen umfasst und eine solche Umkonfigurationsdatenübertragung Zeit in Anspruch nimmt, vorgesehen werden, dass auch vermutlich bald verfügbare Elemente mit bei der Auswahl der jeweils optimalen Geometrie berücksichtigt werden. Dabei kann ausgenützt werden, dass es häufig möglich ist, vorherzusagen, dass bestimmte Elemente bald für die Umkonfiguration verfügbar werden, etwa wenn sie Daten für die Weiterverarbeitung von Zellen erhalten haben, die bereits ihre Umkonfigurierbarkeit angedeutet haben und die Anzahl der noch erforderlichen Verarbeitungstakte, der hierzu datenstromabwärts liegenden Zellen endlich und abschätzbar oder bekannt ist. Derartige Information ist erfindungsgemäß als Umkonfigurierbarkeits-Vorhersage verwaltbar. Daß zu den verfügbaren und/oder benötigten Elementen auch Busverbindungen, Leitungen etc. zählen, sei erwähnt.

Die Auswahl der optimalen Konfiguration kann dabei in einem Präprozessor oder einem Teilbereich des multidimensionalen Feldes der rekonfigurierbaren Elemente erfolgen und insbesondere von einem Datenverarbeitungsprogramm und/oder -mittel übernommen werden, das die Durchführung der verschiedenen Aufgaben zeitlich koordiniert, Priorisierungen vornimmt usw. Es kann sich hierbei insbesondere um einen Teil eines Betriebssystems handeln, sofern das multdimensionale Feld rekonfigurierbarer Elemente als Prozessor oder Koprozessor ausgeführt ist. Die Verwendbarkeit der CT, eines Schedulers für Hyperthreading, Multitasking, Multithreading usw. sei erwähnt. Auf entsprechende weitere Teile der vorliegenden Anmeldung sei diesbezüglich verwiesen. Daß solche Einheiten hard- und/oder softwaremäßig implementierbar sind, sei erwähnt.

Gerade dann, wenn Konfigurationsdaten aus einem Speicher eingelesen werden, der nicht vernachlassigbare Zugriffszeiten besitzt, bzw. wenn sie, sollte eine Echtzeitbestimmung einer Konfiguration gewünscht werden, mit nicht vernachlässigbaren Generierungszeiten generiert werden, ist es wünschenswert, zunächst einen Kenndatensatz vorzusehen, der gegenüber dem eigentlichen Konfigurationsdatensatz in der Grösse reduziert ist und dann eine Auswahl nur auf Grund dieses Kenndatensatzes zu treffen. So kann etwa beim Laden einer neuen Konfiguration aus einem langsamen Speicher wie von einer Festplatte zunächst lediglich ein Kenndatensatz bzw. eine Kenndatensatzgruppe heruntergeladen werden, der die Umrisse der Konfiguration betrifft. Da ein solcher Umrisskenndatensatz in der Größe gegenüber dem vollständigen Konfigurationsdatensatz typisch sehr reduziert sein wird, ist es auch möglich, eine Vielzahl von Kenndatensätzen für eine Vielzahl unterschiedlicher Konfigurationen vorab in einen Hauptspeicher zu laden, der einen sehr schnellen Zugriff erlaubt, an Hand der unterschiedlichen Konfigurationsdatensätze eine schnelle Auswahl zu treffen und dann aus dem langsamen Speicher die kompletten Konfigurationsdaten zur ausgewählten Konfiguration herunter zu laden. Es sei darauf hingewiesen, dass es in solchen Fällen auch möglich ist, einen Teil der Konfigurationen vorneweg miteinzulesen, etwa dann, wenn absehbar ist, dass bestimmte Konfigurationen typisch bevorzugt sind, sei es, weil statistische Auswertungen des typischen Datenverarbeitungsbetriebes für eine Vielzahl von multidimensionalen Feldern rekonfigurierbarer Elemente oder für ein einzelnes multidimensionales Feld dies ergeben haben, etwa weil zu einer Gruppe von Anwendungen wie im UMTS-Base-Station-Bereich durch Analyse typischer Aufgaben festgestellt wurde, dass bestimmte Umkonfigurationen besonders häufig auftreten, oder weil für einen einzelnen Benutzer festgestellt wurde, dass immer wieder dieselben Anwendungen parallel in bestimmter Weise in das Feld hinein konfiguriert werden müssen. Das Vorab-Mitladen bestimmter Konfigurationen kann auch dann sinnvoll sein, wenn sich diese Konfigurationen durch eine besonders einfache Geometrie auszeichnet, etwa weil sehr kleine Volumina des multidimensionalen Feldes rekonfigurierbarer Elemente davon überdeckt werden (Volumina nimmt hier auf das Volumen des multidimensionalen Feldes Bezug, bezeichnet also bei zweidimensionalen Felder rekonfigurierbarer Elemente die Fläche bzw. Flächengeometrie der für die Umkonfiguration verfügbaren rekonfigurierbaren Elemente etc.).

Es ist auch möglich und insbesondere bei der Abarbeitung komplexer Aufgabenstellungen, sei es durch die Abarbeitung besonders rechenintensiver Probleme, sei es im Multitasking, Multithreading oder bei anderen Formen der Parallelabarbeitung von Daten, auch bevorzugt, zu überprüfen, ob mehrere, insbesondere gleich priorisierte Elementgruppenanordnungen für unterschiedliche Aufgaben simultan durch geeignete Auswahl in das Feld hinein konfigurierbar sind. Dabei kann, abhängig von der Priorisierung einer bestimmten Aufgabe vorgesehen werden, dass die für die Abarbeitung einer vorgegebenen Aufgabe zur Verfügung gestellte Fläche oder Abarbeitungszeit größer oder kleiner ausfällt, etwa indem durch Aufbau von Sequenzern mit den Daten handhabenden Elementen die Größe einer Konfiguration unter Verlangsamung der Datenabarbeitung verringert wird.

Es kann auch erwünscht sein, dass zunächst eine erste Elementgruppenanordnung in das Feld hinein konfiguriert wird und begonnen wird, mit dieser Elementgruppenanordnung die Aufgabe abzuarbeiten, bis ein vorgegebenes Ereignis auftritt und dann unter zumindest partieller Rekonfiguration mit der Aufgabenabarbeitung in einer weiteren Elementgruppenanordnung fortgefahren wird. Hierbei kann etwa vorgesehen werden, dass zur Erzielung einer bevorzugten Geometrie von Konfigurationen auf dem multidimensionalen Feld, etwa streifenförmig hintereinander angeordneten Zellen für jede Aufgabe, zu festgelegten Taktzeiten, etwa alle tausend, zehntausend oder hunderttausend Takte, die Abarbeitung aller oder eines Teiles aller Konfigurationen unterbrochen wird, die Ergebnisse wie erforderlich zwischengespeichert werden, auch was nur in einer Konfiguration intern erforderliche Daten wie Schleifen-, Zählerstände usw. angeht, und dann eine Neukonfiguration mit entsprechenden, bevorzugten Geometrien vorgenommen wird, um so ein allmähliches Zerfasern von Konfigurationen zu vermeiden, was schon aufgrund des erhöhten Bedarfs an Busleitungen unerwünscht ist.

Alternativ und/oder zusätzlich ist es auch möglich, selbstfaltende Konfigurationen vorzusehen, wobei etwa zunächst mit der Abarbeitung einer Konfiguration über das gesamte Array begonnen wird, und sich dann, sobald zusätzliche Ressourcen durch eine andere Aufgabe angefordert werden, diese erste Konfiguration mehr oder minder selbsttätig zusammenzieht, etwa durch Sequenzerbildung mit einem Element, um Elemente für die neue Aufgabe freizugeben. Dieses Zusammenziehen kann durch Vorgabe neuer, Platz sparenderer Konfigurationen für ein und dieselbe Aufgabe erreicht werden, insbesondere dann, wenn diese Platz sparenderen Konfigurationen in bei den Daten handhabenden Elementen vorgesehenen Konfigurationsspeichern mit abgelegt werden. Auf die Anmeldung zur Wave-Rekonfiguration sei dabei nur beispielsweise hingewiesen. Es ergibt sich dann eine Situation, bei der Konfigurationen allmählich enger und enger zusammenrücken.

Die Auswahl einer vorgegebenen Elementgruppenanordnung, die in ein Feld hinein zu konfigurieren ist, kann, abgesehen von der verfügbaren Geometrie, auch von anderen Parametern abhängig gemacht werden. Hierzu zählt unter anderem die erzielbare Abarbeitungsgeschwindigkeit, die Priorität einer Aufgabe und/oder der Energieverbrauch, der zur Abarbeitung einer vorgegebenen Aufgabe in einer vorgegebenen Zeit erforderlich ist. Es sei darauf hingewiesen, dass mehrere Parameter gleichzeitig betrachtet werden können, sei es dadurch, dass zunächst anhand eines ersten Parameters wie des benötigten Feldvolumens als gleichwertig angesehene Konfigurationen durch Betrachten eines zweiten Parameters verworfen werden, sei es, indem, etwa mit Methoden der unscharfen Logik, mehrere Parameter gleichzeitig soweit wie möglich optimiert werden.

Die Erfindung wird nun im Folgenden nur beispielsweise anhand der Figuren erläutert, worin gezeigt ist durch
- Fig. D1: ein multidimensionales Feld Daten handhabender Elemente in teilweise zu rekonfigurierendem Zustand;
- Fig. D2: Beispiele für unterschiedliche Konfigurationsgeometrien;
- Fig. D3: ein teilweise zur Laufzeit umkonfigurierter Prozessor.

Nach Fig. D1 umfasst eine allgemein mit 1 bezeichnete Datenverarbeitungsvorrichtung 1 ein multidimensionales Feld rekonfigurierbarer Elemente 2 sowie einen Präprozessor 3, der Konfigurationen in das multidimensionale Feld 1 über geeignete Datenbusse 4 einspeist und Informationen über rekonfigurierbare Elemente aus dem multidimensionalen Feld 2 mehrere Elemente erhält sowie mit einem Speicher 5 mit langsamem Zugriff verbunden ist, in dem Konfigurationen für in dem multidimensionalen Feld 2 abzuarbeitende Aufgaben vorab abgelegt sind.

Der multidimensionale Prozessor 1 ist im vorliegenden Beispiel eine XPU-Architektur, die PAE als konfigurierbare Elemente aufweist und nach PACT02, 04, 08, 10, 13 aufgebaut ist. Er erhält Daten von Eingabe-/Ausgabe-Schnittstellen 6 in Echtzeit zur Abarbeitung, wobei nicht vorhersehbar ist, wie diese Daten eintreffen und/oder abzuarbeiten sind. Es können hierfür eine Tastatur, Bilder abrufende Kameras, A/D-Wandler usw. vorgesehen sein.

Das multidimensionale Feld 2 besteht, zur Vereinfachung der Veranschaulichung, obwohgl technologisch keinesfalls zwingend, vorliegend nur aus einer Reihe ausschließlich identischer datenhandhabender Elemente, zwischen denen geeignete Vernetzungen über Busse und dergleichen konfigurierbar sind. Aus Gründen der Anschaulichkeit wird vorliegend von unbegrenzten Busressourcen ausgegangen, obgleich rein praktisch die typische Anwendung auch solcher Ressourcen und deren Knappheit bei der Vorabbestimmung multipler Konfigurationsmöglichkeiten berücksichtigt wird. Die datenhandhabenden Elemente sind im vorliegenden Fall geeignet, sequenzartig die Befehle abzuarbeiten, wie dies per se bekannt ist, das heißt, es ist möglich, Sequenzer über einzelne Zellen oder Gruppen derer aufzubauen. Daß hierbei ein Zeitteilungsmultiplexing möglich ist, sei erwähnt. Dies erlaubt eine entsprechende Faltung mehrerer Operationen, dann dann bei großen Arrays bzw. mehr Platz auch ausgefaltet werden können.

Das multidimensionale Feld 2 ist laufzeitrekonfigurierbar, das heißt es ist möglich, einzelnen der datenhandhabenden Elemente oder Gruppen derer neue Aufgaben während der Laufzeit zuzuordnen, ohne den Betrieb der Gesamt-Anordnung oder anderer Elemente bzw. Gruppen derer insgesamt zu unterbrechen. Wie bevorzugt und per se bekannt sind den datenhandhabenden Elementen Konfigurationsspeicher lokal zugeordnet, genau so wie Register, nämlich Forward- und Backward-Register, Busleitungen, feingranulare Zustandsmaschinen zum Austausch von Triggersignalen untereinander und mit der Präprozessoreinheit 3 usw. Auf die Möglichkeit der Ausgestaltung der rekonfigurierbaren Elemente nach PCT-DE 97/02949, PCT-DE 97/02998, PCT-DE 98/00334, PCT/DE 99/00504, PCT/DE 99/00505, PCT/DE 00/01869 usw. sei hingewiesen.

Der Präprozessor 3 ist dazu ausgebildet, Konfigurationen in das multidimensionale Feld hinein zu laden und zwar über Leitungen 4, wenn er aus dem multidimensionalen Feld die Meldung erhält, dass einzelne Elemente oder Gruppen derer rekonfigurierbar sind. Der Präprozessor 3 enthält einen lokalen Speicher (Cache) und ist mit einem weiteren Speicher 5 (Harddisk, RAM) verbunden, auf den langsamer zugegriffen werden kann und auf dem Konfigurationsdaten abgelegt sind. Geeignet ist etwa eine CT.

Es sei darauf hingewiesen, dass es nicht erforderlich ist, den Präprozessor 3 als externes Bauteil vorzusehen. Die gezeigte Darstellung wurde ausschließlich aus didaktischen Gründen gewählt. Er kann integriert sein mit dem multidimensionalen Feld 2 auf einem einzelnen Chip und/oder seine Funktion kann durch einzelne Daten handhabende Elemente 2 des Prozessorfeldes ausgeführt werden.

Über die Leitungen 4 werden Konfigurationsdaten und Konfigurationsanforderungen übertragen. Auf die Implementierung von Rdy/Ack-Protokollen, Vorab-Konfiguration von Elementen in e-lementennahen Speichern etc., die möglich, aber nicht zwingend ist, wird hingewiesen.

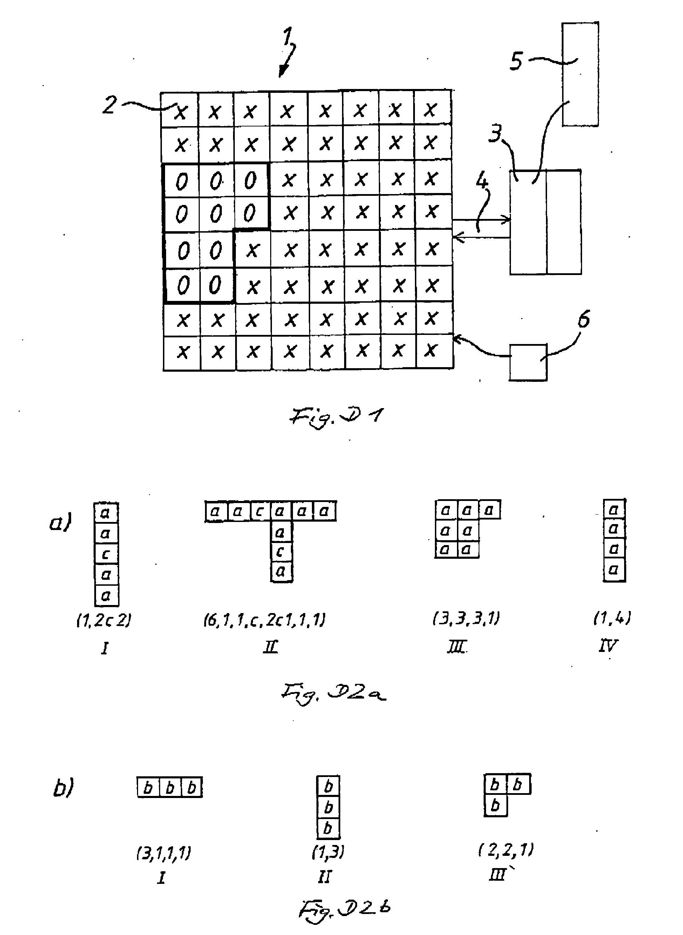

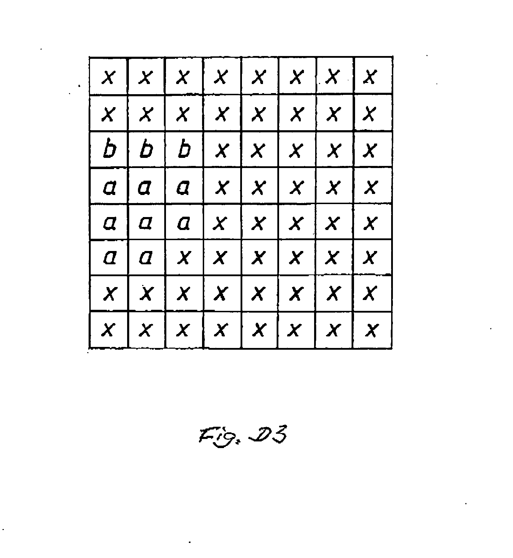

Im Speicher 5 sind nun eine Vielzahl von Konfigurationen für unterschiedliche Aufgaben und Kenndaten hierzu abgelegt. Dies wird für ein einfaches Beispiel mit Bezug auf Fig. 2 erläutert.

Nach Fig. D2 sind etliche Konfigurationen für zwei Aufgaben a) und b) abgelegt. Wie ersichtlich, sind für die Aufgabe a) insgesamt vier Konfigurationen abgelegt, die alle dieselbe Funktion ausführen, aber unterschiedliche Verbindungen der Zellen untereinander haben und sich insbesondere hinsichtlich ihrer äußeren geometrischen Gestalt unterscheiden, in der die Zellen angeordnet sind.

Wie ersichtlich, sind beispielsweise drei Konfigurationen vorabgelegt, in denen sieben datenhandhabende Elemente wie PAEs benötigt werden und eine Konfiguration, in der unter Ausnutzung der Sequenzereigenschaft der datenhandhabenden Elemente nur vier Elemente benötigt werden. Die geometrische Form der jeweiligen Konfiguration ist dabei wie durch die Zahlen in Klammern angedeutet, gleichfalls mitabgelegt. Dieser Kenndatensatz umfasst eine erste Ziffer, die angibt, wieviele Spalten Abstand die äußersten Zellen links und rechts voneinander haben; es folgen dann nach einem Komma die Anzahl der Elemente in einer Spalte, die benötigt werden. Sind in einer Spalte Reihen frei, d. h. nicht belegt, steht gleichfalls ein b in der Kennung. Ist dabei eine Spalte freigelassen, das heißt von der jeweiligen Konfiguration bis auf Busse nicht belegt, so steht hierfür ein b in der Konfiguration. Dies ist ersichtlich an den Konfigurationen I und II. Die Daten zu einer Spalte sind von jenen der nächsten Spalte durch Komma getrennt. Ähnliche Konfigurationsdaten sind auch für eine zweite Konfiguration abgelegt b).

Die Anordnung wird verwendet wie folgt:
Wenn im multidimensionalen Feld rekonfigurierbarer Elemente Ressourcen für die Rekonfiguration freigegeben sind, wie dies durch die "0" in Fig. D2 dargestellt ist, so lädt der Präprozessor 3 aus dem Speicher 5 zunächst die wenig umfangreichen und damit schnell zu ladenden Kennsätze zu den Konfigurationnen. Er bestimmt dann, welche Aufgabe schnell abzuarbeiten ist und welche Konfigurationen gemeinsam besonders gut in das Feld eingeladen werden können. Dies geschieht durch Vergleich der maximalen Spaltenbreite einer möglichen Konfiguration mit der tatsächlich verfügbaren Spaltenbreite. Zur Aufgabe a) können so Konfiguration III und IV verworfen werden, die zuviel Spalten benötigen. Aus den verbleibenden sind aufgrund der geometrischen Form die Konfigurationen I und II gleichfalls zu verwerfen. Es wird dann untersucht, welche Konfiguration von b) zu laden wäre. Hier sind per se alle drei Konfigurationen ladbar.

Nun wird untersucht, ob es eine Möglichkeit gibt, von den verbleibenden Konfigurationen zu den Aufgaben gleichzeitig zwei Konfigurationen in das Feld zu laden. Dazu werden die Konfigurationen in unterschiedlicher Weise aneinander gesetzt und es wird die benötigte maximale Spalten- und Reihenzahl mit der verfügbaren Maximalzahl verglichen. Es wird so festgestellt, daß sich eine optimale Ausnutzung der freigewordenen Elemente ergibt, wenn die Konfiguration Ib und die Konfiguration Ia unmittelbar übereinander angeordnet werden. Diese Konfigurationen werden dann in das Prozessorfeld geladen.

Daraufhin kann die Datenverarbeitung mit einer Konfigurationsanordnung wie in Fig. D3 gezeigt fortgesetzt werden. Es sei erwähnt, dass in Fällen, in denen unterschiedliche Daten handhabende Elemente vorgesehen werden, die entsprechende Information gleichfalls im Kenndatensatz abgelegt werden kann.

Wie vorstehend ersichtlich, ist die Art und Weise, wie ein gegebenes Prozessorfeld für eine vorgegebene Weise konfiguriert werden muß, nicht eindeutig. Dies gilt insbesondere dann, wenn es sich um komplexe Felder handelt, bei denen etwa zumindest zum Teil in den Leitungen Register vorgesehen sind und weiter mit diesen insbesondere auch Additionen und/oder Vergleiche von Daten durchzuführen sind, wie dies auch in arithmetische Logikeinheiten (ALUs) aufweisenden Logikzellen des Feldes der Fall sein kann. Oft ist es auch möglich und/oder nötig, etwa bei Inbetriebnahme, aus vielen Konfigurationen mehrere mögliche zu wählen.

Es ist bereits vorgeschlagen worden, eine Konfiguration aus mehreren per se verwendbaren auszuwählen anhand der momentanen Konfigurierbarkeit unter geometrischen Aspekten, der Ressourcenverfügbarkeit und/oder auszuwählen aufgrund von Geschwindigkeitsaspekten. Dies kann die Auswahl erleichtern, stellt aber oftmals nur unzureichende Kriterien dar. Es ist wünschenswert, die Konfigurationsauswahl weiter verbessern zu können. Es ist weiter oftmals möglich, eine bestimmte Datenverarbeitungsaufgabe selbst auf unterschiedliche Weise durchzuführen. So ist etwa eine Reihe von Algorithmen bekannt, die es erlauben, einen Satz Daten auf unterschiedliche Weise zu sortieren. Auch hier ist es erforderlich, zwischen unterschiedlichen Algorithmen, die prinzipiell geeignet sind, eine bestimmte Datenverarbeitungsaufgabe zu bewältigen, aufgrund von objektivierbaren Kriterien zu wählen. Daß diese Wahl zur Laufzeit und/oder davor erfolgen kann, sei erwähnt. Insgesamt ist es somit wünschenswert, Auswahlmöglichkeiten bei der Datenverarbeitung mit konfigurierbaren multidimensionalen Prozessorfeldern zu verbessern, etwa um bei festgespeicherten Konfigurationen sicherzustellen, daß eine bereits anwendungszweckoptimierte Auswahl getroffen wurde.

Die vorliegende Erfindung schlägt somit in einem ersten Grundgedanken ein Verfahren zur Auswahl eines aus einer Vielzahl von Wegen zur Erzielung eines Datenverarbeitungsergebnisses bei der Datenverarbeitung unter zumindest möglicher Verwendung multidimensionaler Felder konfigurierbarer Datenhandhabungselemente vor, bei welchem vorgesehen ist, daß den Datenhandhabungselementen konfigurationsabhängig verbrauchsbezogene kennzeichnende Größen zugeordnet werden und eine Wegauswahl anhand der Zuordnung erfolgt.

Ein weiterer Grundgedanke kann somit in der Erkenntnis gesehen werden, daß bestimmten Datenverarbeitungswegen typische Leistungs- bzw. Energieaufnahmewerte zugeordnet werden können, um dann eine Wegauswahl unter Berücksichtigung derselben vorzunehmen. Als Erzielung eines Datenverarbeitungsergebnisses wird auch eine bestimmte Art und Weise einer Zwischenergebnisberechnung und/oder einer Datenhandhabung etc. betrachtet. Durch die Zuordnung verbrauchskennzeichnender Größen wird also eine wesentliche Ojektivierung der Wegauswahl möglich.

Die Auswahl eines Weges kann beispielsweise die Wahl eines gegebenen Algorithmus aus einer Vielzahl unterschiedlicher Algorithmen umfassen, sei es für Aufgaben wie das Sortieren von Daten, bestimmte mathematische Transformationen oder dergleichen. Liegen in einer Programmmodul-Bibliothek etwa mehrere Sortieralgorithmen, Algorithmen zur Bestimmung einer Fourier-Transformierten oder dergleichen vor, so kann z. B. zu jeder eine verbrauchskennzeichnende Größe ermittelt werden und es wird dann unter Berücksichtigung derselben eine Auswahl vorgenommen. So wird es möglich, Algorithmen zu wählen, die beispielsweise einen besonders niedrigen Energieverbrauch besitzen. Dies kann für mobile Anwendungen wie bei Laptops, Funktelefonen und dergleichen sinnvoll sein, bietet aber auch in Bereichen Vorteile, bei denen sehr rechenintensive Aufgaben zu bewältigen sind, etwa in Servern, Basestations usw., wo die in einer Verarbeitungseinheit erzeugte Leistung weggekühlt und/oder abgeführt werden muß. Durch die Erfindung können so Systemgesamtkosten minimiert werden. Auch kann etwa ein Place&Route-Algorithmus die Optimierung ausnutzen, etwa zur Erzielung niederenergetischer Anordnungen. Dies ist besonders bevorzugt und wird als für sich erfinderisch angesehen.

Es ist weiter möglich, für ein und denselben Algorithmus eine Vielzahl unterschiedlicher Konfigurationen vorzusehen, etwa unter Berücksichtigung verschiedener, simultan und/oder sequenziell auf das multidimensionale Feld zu konfigurierender Teilaufgaben, und dann eine Auswahl aus diesen unter Auswertung der jeweils zugeordneten Größe vorzunehmen.

Weiter ist es möglich, unter Anwendung des erfindungsgemäßen Verfahrens darüber zu befinden, ob eine gegebene Aufgabe der Datenverarbeitung, bzw. eine Teilaufgabe, dem betrachteten multidimensionalen Feld konfigurierbarer Datenhandhabungselemente und/oder einem anderen Element zur Datenverarbeitung außerhalb des multidimensionalen Feldes zugeordnet werden soll; so kann etwa darüber entschieden werden, ob dann, wenn das multidimensionale Feld als Koprozessor dient, eine bestimmte Teilaufgabe besser auf einer rein sequenziell arbeitenden CPU oder dem rekonfigurierbaren, typisch als Datenflußprozessor oder dergleichen arbeitenden multidimensionalen Feld abgearbeitet werden soll. Es ist auch möglich, über das Erfordernis oder die Sinnhaftigkeit dedizierter Schaltkreise wie ASICs für bestimmte Aufgaben zu befinden.

Typisch wird es sich bei dem Feld konfigurierbarer Datenhandhabungselemente um ein zweidimensionales Feld handeln. Es sei erwähnt, daß die Erfindung für Felder wie FPGAs, XPP-Prozessoren usw. anwendbar ist. Es ist besonders bevorzugt für zur Laufzeit konfigurierbare, insbesondere partiell zur Laufzeit ohne Störung nicht umzukonfigurierende Elemente teil-rekonfigurierbarer Prozessorfelder.

In typischen Anwendungen wie bei XPP-Feldern werden als zu berücksichtigende Datenhandhabungselemente insbesondere zumindest einige, bevorzugt alle der Elemente Busse, Register, ALUs, RAMs, I/O-Ports sowie konfigurierende Einheiten (CT's) erfaßt. Es sei darauf hingewiesen, daß von bestimmten dieser Teile nur eine abgeschätzte oder partielle Verbrauchsberücksichtigung erforderlich ist; so brauchen etwa bei Bussen lediglich bestimmte Treiberstufen und dergleichen berücksichtigt werden. Weiter kann es erforderlich sein, auch Taktbeschaltungen mit zu erfassen, sei es, weil in bestimmten Datenverarbeitungswegen eine Voll- oder Teilabschaltung eines Taktzweiges möglich ist, sei es, weil bestimmte Schaltungsbereiche mit einem unterschiedlichen Takt versorgt werden können oder müssen.

Es ist bevorzugt, wenn der kennzeichnende Wert nur grob abgeschätzt wird, etwa dahingehend, daß festgestellt wird, ob ein bestimmtes Element momentan verwendet wird und/oder konfiguriert ist, oder ob es stattdessen nicht verwendet wird und gegebenenfalls sogar von einer Spannungsversorgung bis auf einen Wake-up-Schaltkreis und/oder von einer Taktversorgung zumindest weitgehend abgeklemmt ist. Es ist also nicht erforderlich, eine absolut exakte Verbrauchskennzeichnung vorzunehmen, etwa unter Festlegung des Verbrauchs der spezifischen algebraischen Operation, die einer jeweiligen arithmetisch-logischen Einheit aktuell und/oder dauerhaft zugeordnet wird. Vielmehr kann es ausreichend sein, die verbrauchskennzeichnende Größe nur dahingehend zu bestimmen, ob und wie weit tatsächlich das jeweilige Element im Augenblick verwendet wird. Ausnahmen hiervon sind möglich. Eine Ausnahme kann insbesondere gemacht werden für Operationen wie Multiplikationen, bei denen sehr große Schaltkreisflächen mit Leistung versorgt werden müssen. In einem solchen Fall kann eine weitere Detaillierung vorgesehen werden.

Es ist möglich und bevorzugt, jedem unterschiedlichen Datenhandhabungselement unterschiedliche Kennzahlen, wie strom- und/oder leistungsaufnahmebezogener Größen als verbrauchskennzeichnende Größen zuzuordnen. Dieses kann gegebenenfalls in taktabhängiger Weise (Leistungsaufnahme pro Taktfrequenz) geschehen. Weiter ist es möglich, eine Auswahl unter Berücksichtigung eines Summenwertes vorzunehmen, also über die Betrachtung des Gesamtverbrauchs oder abgeschätzten Gesamtverbrauchs eines betrachteten Weges zu entscheiden.

Die Auswahl wird typisch nicht alleine unter Berücksichtigung der verbrauchskennzeichnenden Größen erfolgen, sondern kann andere Parameter miterfassen, etwa eine erforderliche Ausführungszeit, erforderliche Ressourcen auf einem multidimensionalen Feld, eine aktuelle oder erwartete Prozessorauslastung durch andere Aufgaben und/oder eine aktuell gewünschte beziehungsweise erwartete oder zulässige Leistungsaufnahme. Die Kennzahlen sind durch Meßwerte und/oder Hardware- bzw. Syntheseanalysen erhältlich und insbesondere in Look-Up-Tabellen hinterlegbar.

Die Auswahl des jeweiligen Weges kann vor der eigentlichen Datenverarbeitung erfolgen, etwa bei der Festlegung von später zu ladenden Konfigurationen unter mehreren, theoretisch implementierbaren Konfigurationen. In einem solchen Fall ist es besonders ist bevorzugt, wenn die kennzeichnende Größe während der Simulation der Datenverarbeitungsfunktionen mit ermittelt wird. Alternativ kann vorgesehen werden, daß die Auswahl unter verschiedenen möglichen Wegen während der Laufzeit erfolgt. In einem solchen Fall werden etwa mehrere mögliche Algorithmen, z. B. um Daten zu sortieren, bereitgestellt, es wird dann abgefragt, wie viele einzelne Daten zu sortieren sind und wie gegebenenfalls der Ordnungsgrad dieser Daten ist und es wird erst danach eine Auswahl unter verschiedenen, vorher bestimmten Algorithmen anhand der ihnen zugeordneten parametrierten Verbrauchskennzeichnungsgrößen wie der Gesamtleistungsaufnahme usw. vorgenommen. Analog kann auch eine Konfiguration zur Laufzeit abhängig von z. B. einer momentan möglichen oder gewünschten Stromaufnahme erfolgen.

Dieser Aspekt der Erfindung wird im folgenden nur beispielsweise beschrieben, ohne daß Bezug genommen wird auf eine
Figur.

Es wird zunächst eine gewünschte Art der Daten-Bearbeitung festgelegt, die auf dem Prozessorfeld durchgeführt werden soll. Beispielsweise wird ein Viterbi-Algorithmus programmiert und eine für das betrachtete Prozessorfeld geeignete Konfiguration bestimmt. Es wird dann ermittelt, welche Einheiten auf dem Prozessorfeld verwendet werden und über wie viele Takte dies geschieht. Bei der Betrachtung der verwendeten Elemente werden in einem Beispiel berücksichtigt ALUs, Vorwärts- und Rückwärts-Register (FREG und BREG) sowie Schalter in Bussen (LSW und RSW). Es wird dann der gesamte Energieverbrauch je Elementart bestimmt und anschließend der gesamte Energieverbrauch aller unterschiedlichen Einheiten. Die Energieverbrauchswerte für ein einzelnes Element je Takt sind ihrerseits abgeschätzt aus Simulationen der Hardwareschaltungen bei der betrachteten Architektur und sind für das Verfahren der Erfindung tabellarisch hinterlegt.

In dem betrachteten praktischen Beispiel sind für die Implementierung eines gegebenen Viterbi-Algorithmus 10 ALUs, 17 Vorwärtsregister, 23 Rückwärtsregister sowie 30 Busschalter (LSW) in einer und 35 Schalter in der entgegengesetzten Richtung (RSW) erforderlich. Bei einem Energieverbrauch von 4,85 pW/Hz je ALU, 7,01 pW/Hz pro FREG, 7,02 pW/Hz je BREG sowie 2,03 pW/Hz je Busschalter ergibt sich folgende Tabelle:
Number of cycles: 1582
Energy consumption

| | Einzelkennzahl | Gesamtkennzahl |
|---|---|---|
| ALU: | 10,00 x 4,85 = | 48,50 |
| FREG: | 17,00 x 7,01 = | 119,17 |
| BREG: | 23,00 x 7,02 = | 161,46 |
| LSW: | 30,00 x 2,03 = | 60,90 |
| RSW: | 35,00 x 2,03 = | 71,05 |
| | Total: | 461,08 pW/Hz |

Es kann nun der Implementierung der Viterbi-Transformation ein Gesamtleistungsverbrauch von 461,08 pW/Hz zugeordnet werden und dieser so erhaltene Wert verglichen werden mit Werten, die bei anderen Algorithmen und/oder Konfigurationen erhalten werden und/oder durch dedizierte Schaltkreise wie ASICs zu erhalten sind.

Es sei nun erwähnt, daß die Auswahl einer aus einer Vielzahl von Konfigurationen, auch dann sinnvoll sein kann, wenn das Datenverarbeitungslogikzellen- und/oder, hier gleichbedeutend, Mischfeld aus analogen und/oder digitalen Zellen (wie beschrieben) an eine insbesondere sequentielle CPU angekoppelt ist.

## Patentansprüche

1. Verfahren zur Datenverarbeitung
unter Verwendung eines multidimensionalen Feldes
konfigurierbarer Datenhandhabungselemente,
bei welchem
eine Vielzahl von
Wegen
zur Erzielung eines Datenverarbeitungsergebnisses bei der Datenverarbeitung
bestimmt wird,
und zwar so,
dass
gemäß zumindest einem der möglichen Wege Daten
unter Verwendung des multidimensionalen Feldes konfigurierbarer Datenhandhabungselemente
verarbeitet werden sollen
und
dass
Unterschiede für die Wege
hinsichtlich kennzeichnender Größen
bestehen,
eine Auswahl unter den Wegen getroffen wird,
und
eine Datenverarbeitung entsprechend des ausgewählten Weges erfolgt,
wobei konfigurationsabhängig
auf die Leistungsaufnahme
der Datenhandhabungselemente
bezogene Größen
bestimmt
und
den Wegen
diesbezügliche Unterschiede kennzeichnende Größen
zugeordnet werden
**dadurch gekennzeichnet, dass**
eine Wegauswahl
unter Bewertung der zugeordneten Größen
zur Laufzeit
erfolgt,
entsprechend
der Bewertung zur Laufzeit eine Konfiguration für das Feld konfigurierbarer Elemente vorgesehen wird
und
Daten entsprechend dem ausgewählten Weg verarbeitet werden.

2. Verfahren nach dem vorhergehenden Anspruch,
**dadurch gekennzeichnet, dass**
die Wegauswahl
zur Laufzeit
weiter
unter Berücksichtigung von zumindest einer der Größen
erforderliche Ausführungszeit,
erforderliche Ressourcen,
aktuelle Prozessorauslastung,
erwartete zukünftige Prozessorauslastung aktuelle
gewünschte oder
mögliche
Leistungsaufnahme
erfolgt.

3. Verfahren nach einem der vorhergehenden Ansprüche, **dadurch gekennzeichnet, dass** Datenverarbeitungswege bestimmt werden, bei denen Unterschiede dahingehend bestehen, dass in bestimmten Datenverarbeitungswegen eine Voll- oder Teilabschaltung eines Taktzweiges vorgesehen ist und zur Laufzeit unter diesen Datenverarbeitungswegen ausgewählt wird.

4. Verfahren nach einem der vorhergehenden Ansprüche, **dadurch gekennzeichnet, dass** eine Konfiguration ausgewählt wird, bei welcher bestimmte Schaltungsbereiche mit einem unterschiedlichen Takt versorgt werden.

5. Verfahren nach einem der beiden vorhergehenden Ansprüche, **dadurch gekennzeichnet, dass** das multidimensionale Datenverarbeitungsfeld weiter einen Cache aufweist, der sliceweise ausgestaltet ist und Cache-Bereiche sliceweise durch einen von
Heruntertaktung,
Taktabtrennung oder
Leistungsabtrennung
abgetrennt sind.

6. Verfahren nach dem vorhergehenden Anspruch, **dadurch gekennzeichnet, dass** die Vielzahl von Wegen unterschiedliche Algorithmen implementieren.

7. Verfahren nach einem der vorhergehenden Ansprüche, **dadurch gekennzeichnet, dass** die Vielzahl von Wegen unterschiedliche Konfigurationen implementieren.

8. Verfahren nach dem vorhergehenden unabhängigen Anspruch oder einem Unteranspruch hierzu, **dadurch gekennzeichnet, dass** über die Zuordnung einer gegebenen Datenverarbeitungsaufgabe und/oder -teilaufgabe an ein multidimensionales Feld konfigurierbarer Datenhandhabungselemente und/oder einer anderen Datenverarbeitungsarchitektur, insbesondere an ein ASIC, und/oder an eine rein sequenziell arbeitende CPU bei der Wegauswahl entschieden wird.

9. Verfahren nach dem vorhergehenden unabhängigen Anspruch oder einem Unteranspruch hierzu, **dadurch gekennzeichnet, dass** ein zweidimensionales Feld konfigurierbarer Datenhandhabungselemente betrachtet wird.

10. Verfahren nach dem vorhergehenden unabhängigen Anspruch oder einem Unteranspruch hierzu, **dadurch gekennzeichnet, dass** eine Auswahl aus einem zur Laufzeit konfigurierbaren, insbesondere störungsfrei partiell rekonfigurierbaren Prozessorfeld vorgenommen wird.

11. Verfahren nach dem vorhergehenden unabhängigen Anspruch oder einem Unteranspruch hierzu , **dadurch gekennzeichnet, dass** als konfigurierbare Datenhandhabungselemente zumindest einige, bevorzugt alle der Elemente Busse, Register, ALUs, RAMs und/oder andere grobgranulare Datenhandhabungselemente betrachtet werden.

12. Verfahren nach dem vorhergehenden unabhängigen Anspruch oder einem Unteranspruch hierzu, **dadurch gekennzeichnet, dass** der kennzeichnende Wert unabhängig von der tatsächlichen aktuell zugeordneten Aufgabe nur davon abhängig gewählt wird, ob das jeweilige Datenhandhabungselement überhaupt verwendet wird oder nicht.

13. Verfahren nach dem vorhergehenden Anspruch, **dadurch gekennzeichnet, dass** jeder Konfiguration eine eigene Kennzahl bei der Verwendung zugeordnet wird.

14. Verfahren nach dem vorhergehenden unabhängigen Anspruch oder einem Unteranspruch hierzu, **dadurch gekennzeichnet, dass** eine strom-, arbeits- und/oder leistungsbezogene Größe als verbrauchskennzeichnende Größe zugeordnet wird.

15. Verfahren nach dem vorhergehenden Anspruch, **dadurch gekennzeichnet, dass** eine Auswahl unter Berücksichtigung eines Summenwertes verbrauchskennzeichnender Größen erfolgt.

16. Verfahren nach dem vorhergehenden Anspruch, **dadurch gekennzeichnet, dass** eine Auswahl vor der eigentlichen Datenverarbeitung erfolgt.

## Claims

1. A method for processing data
by using a multidimensional field of configurable data handling elements,
wherein
a plurality of
paths are determined
for achieving a data processing result during data processing,
such
that
in accordance with at least one of the possible paths data should be processed
by using the multidimensional field of configurable
data handling elements
and
that
there are differences for the paths
in view of characterizing values,
a selection is made among the paths
and
data processing is carried out in accordance with the selected path,
wherein, depending on the configuration,
values relating to the power input
of the data handling elements
are determined
and
values characterizing respective differences
are assigned to the paths,
**characterized in that**
a path selection is carried out
by assessing the assigned values
at runtime,
in accordance with
the assessment at runtime
a configuration is provided for the field of configurable elements
and
data are processed in accordance with the selected path.

2. The method according to the preceding claim,
**characterized in that**
the path selection
at runtime
is further carried out
by taking into account at least one of the values
required execution time,
required sources,
current processor utilization,
expected future processor utilization,
current
desired or
possible
power input.

3. The method according to any one of the preceding claims, **characterized in that** data processing paths are determined in which there are differences **in that** in specific data processing paths a full or partial deactivation of a clock branch is intended and at runtime a selection is made among said data processing paths.

4. The method according to any one of the preceding claims, **characterized in that** a configuration is selected in which specific switching areas are supplied with a different clock.

5. The method according to any one of the two preceding claims, **characterized in that** the multidimensional data processing field further comprises a cache which is configured in a slice-wise manner and cache areas are separated in a slice-wise manner by any one of
stepping down,
clock separation or
power separation.

6. The method according to the preceding claim, **characterized in that** the plurality of paths implement different algorithms.

7. The method according to any one of the preceding claims, **characterized in that** the plurality of paths implement different configurations.

8. The method according to the preceding independent claim or a claim dependent thereon, **characterized in that** when selecting the path it is decided about the assignment of a given data processing task and/or partial data processing task to a multidimensional field of configurable data handling elements and/or a different data processing architecture, in particular to an ASIC, and/or to a merely sequentially operating CPU.

9. The method according to the preceding independent claim or a claim dependent thereon, **characterized in that** a two-dimensional field of configurable data handling elements is taken into consideration.

10. The method according to the preceding independent claim or a claim dependent thereon, **characterized in that** a selection is made from a processor field that can be configured at runtime, in particular can be reconfigured partially in a failure-free manner.

11. The method according to the preceding independent claim or a claim dependent thereon, **characterized in that** at least some, preferably all of the elements busses, registers, ALUs, RAMs and/or other coarse-granular data handling elements are considered as configurable data handling elements.

12. The method according to the preceding independent claim or a claim dependent thereon, **characterized in that** the characterizing value is selected independent of the actual currently assigned task only dependent on whether the respective data handling element is in fact used or not.

13. The method according to the preceding claim, **characterized in that** an own characteristic number is assigned to each configuration during use.

14. The method according to the preceding independent claim or a claim dependent thereon, **characterized in that** a current-, work- and/or power-related value is assigned as consumption-characterizing value.

15. The method according to the preceding claim, **characterized in that** a selection is made by taking into consideration a sum value of consumption-characterizing values.

16. The method according to the preceding claim, **characterized in that** a selection is made before the actual data processing.

## Revendications

1. Procédé de traitement de données recourant à un champ multidimensionnel d'éléments configurable de manipulation de données, où une pluralité de voies pour l'obtention d'un résultat du traitement de données est déterminée lors du traitement de données, et cela de telle manière que, conformément à au moins une des voies possibles, des données soient traitées en recourant au champ multidimensionnel d'éléments configurables de manipulation de données, et que des différences existent entre les voies en termes de grandeurs caractéristiques, une sélection soit faite entre les voies, et un traitement des données soit effectué suivant la voie choisie, des grandeurs relatives à la capacité des éléments de manipulation de données étant déterminées en fonction de la configuration et des grandeurs caractéristiques pour les différences correspondantes étant attribuées aux voies,
**caractérisé**
**en ce qu'**une sélection de voie est effectuée par évaluation des grandeurs attribuées quant à la durée, une configuration est prévue pour le champ d'éléments configurables en fonction de l'évaluation quant à la durée, et en ce que les données sont traitées en fonction de la voie sélectionnée.

2. Procédé selon la revendication précédente, **caractérisé en ce que** la sélection de voie quant à la durée est en outre effectuée en tant compte d'au moins une des grandeurs suivantes : temps d'exécution exigée, ressources exigées, charge de processeur actuelle, charge de processeur attendue, capacité actuelle, souhaitée ou possible.

3. Procédé selon l'une des revendications précédentes, **caractérisé en ce que** des voies de traitement de données sont déterminées, où des différences sont présentées **en ce qu'**une désactivation totale ou partielle d'une branche de fréquence est prévue sur certaines voies de traitement de données, et que la sélection quant à la durée est effectuée dans lesdites voies de traitement de données.

4. Procédé selon l'une des revendications précédentes, **caractérisé en ce qu'**une configuration est sélectionnée, où des zones de circuit définies sont soumises à des fréquences différenciées.

5. Procédé selon l'une des deux revendications précédentes, **caractérisé en ce que** le champ de traitement de données multidimensionnel comporte en outre une mémoire cache réalisée en tranches, et **en ce que** des zones de cache sont séparées en tranches par sous-échantillonnage, séparation frécluentielle ou sectionnement de puissance.

6. Procédé selon la revendication précédente, **caractérisé en ce que** la pluralité de voies implémentent des algorithmes différents.

7. Procédé selon l'une des revendications précédentes, **caractérisé en ce que** la pluralité de voies implémentent des configurations différentes.

8. Procédé selon la revendication indépendante précédente ou une revendication dépendante de celle-ci, **caractérisé en ce que**, lors de la sélection de voie, il est décidé de l'affectation d'une tâche et/ou d'une tâche partielle de traitement de données définie à un champ multidimensionnel d'éléments de manipulation de données configurable et/ou à une autre architecture de traitement de données, en particulier à un ASIC, et/ou à une CPU à fonctionnement purement séquentiel.

9. Procédé selon la revendication indépendante précédente ou une revendication dépendante de celle-ci, **caractérisé en ce qu'**un champ bidimensionnel d'éléments de manipulation de données configurables est pris en considération.

10. Procédé selon la revendication indépendante précédente ou une revendication dépendante de celle-ci, **caractérisé en ce qu'**il est procédé à une sélection d'un champ de processeur configurable quant à la durée, en particulier partiellement reconfigurable sans dysfonctionnement.

11. Procédé selon 1a revendication indépendante précédente ou une revendication dépendante de celle-ci, **caractérisé en ce qu'**au moins quelques-uns, préférentiellement la totalité des éléments suivants : bus, registres, ALUs, RAMs et/ou autres éléments de manipulation de données à granulation grossière sont pris en considération comme éléments de manipulation de données configurables.

12. Procédé selon la revendication indépendante précédente ou une revendication dépendante de celle-ci, **caractérisé en ce que** la valeur caractéristique n'est sélectionnée indépendamment de la tâche effective actuellement attribuée qu'en fonction de l'utilisation ou de la non-utilisation de l'élément de manipulation de données correspondant.

13. Procédé selon la revendication précédente, **caractérisé en ce qu'**à chaque configuration est attribué un identifiant propre lors de l'utilisation.

14. Procédé selon la revendication indépendante précédente ou une revendication dépendante de celle-ci, **caractérisé en ce qu'**une grandeur relative au courant, au travail et/ou à la puissance est attribuée en tant que grandeur caractéristique de consommation.

15. Procédé selon la revendication précédente, **caractérisé en ce qu'**une sélection est effectuée en tenant compte d'une valeur cumulée de grandeurs caractéristiques de consommation.

16. Procédé selon la revendication précédente, **caractérisé en ce qu'**une sélection est effectuée avant le traitement de données proprement dit.
